# EUROPÄISCHE PATENTSCHRIFT

(11) **EP 3 448 939 B1**
(45) Veröffentlichungstag und Bekanntmachung des Hinweises auf die Patenterteilung: **26.07.2023**
(21) Anmeldenummer: 17736559.0
(22) Anmeldetag: 25.04.2017
(51) Int. Cl.: C09D 9/00, C11D 1/66, C11D 3/20

(54) **FLÜSSIGE SPÜL- ODER REINIGUNGSZUSAMMENSETZUNG ZUR ENTFERNUNG VON LACKANHAFTUNGEN, SOWIE DEREN VERWENDUNG**
LIQUID DETERGENT OR CLEANING COMPOSITION TO REMOVE PAINT DEPOSITS AND ITS USE
COMPOSITION LIQUIDE DE RINÇAGE OU DE NETTOYAGE, POUR ÉLIMINER DES DÉPÔTS DE LAQUE ET SON UTILISATION

(30) Priorität: 26.04.2016 DE 102016107727
(43) Veröffentlichungstag der Anmeldung: 06.03.2019
(73) Patentinhaber: Chemische Werke Kluthe GmbH, 69115 Heidelberg (DE)
(72) Erfinder: DINGES, Uwe, 68723 Plankstadt (DE); BURGHARDT, Silvia Margareta, 76661 Philippsburg (DE); HARTZ, Stephan, 67346 Speyer (DE)
(74) Vertreter: Beyer, Carsten
(86) Internationale Anmeldenummer: PCT/DE2017/100343
(87) Internationale Veröffentlichungsnummer: WO 2017/186230

(56) Entgegenhaltungen:
- EP-A1- 0 743 358
- EP-A1- 2 669 341
- WO-A1-2011/018366
- AU-A1- 2014 201 248
- DE-A1- 4 405 196
- DE-A1-102012 013 137

## Beschreibung

Die vorliegende Erfindung betrifft eine Stoffzusammensetzung nach dem Oberbegriff des Anspruchs 1.

Danach betrifft die Erfindung eine Stoffzusammensetzung, nämlich flüssige Spül- oder Reinigungszusammensetzung auf Basis organischer Lösungsmittel, insbesondere zur Entfernung von nicht ausgehärteten Lackanhaftungen.

Des Weiteren betrifft die Erfindung die Verwendung einer erfindungsgemäßen Stoffzusammensetzung.

Lösemittelbasierende Zusammensetzungen der eingangs genannten Art, welche auch als Spülmedien, Spülverdünnungen oder Spülverdünner bezeichnet werden können, sind insbesondere aus dem Einsatz in Lackierereien bekannt. Sie dienen dort vor allem zum Entfernen von frischen, noch nicht ausgehärteten Lackanhaftungen, insbesondere von lösemittelbasierenden Ein- wie auch Zwei-Komponenten-Lacken. Hierunter fallen bspw. Klarlacke, Basecoats und Füller.

Die Anwendung solcher lösemittelbasierenden Lacke erfolgt üblicherweise automatisch in einem kontinuierlichen Spritzlackierprozess bei Raumtemperatur. Bspw. erfolgen bei einem Lackierprozess in einer Karosserielackierstrecke im Automobilbau eine Reihe von schnell aufeinander folgenden Prozessabschnitten, welche jede Karosserie durchläuft. Füller und Basecoats werden dabei mit Hilfe einer von den Farbvariationen abhängenden Anzahl von Versorgungsleitungen (Ringleitungen) auf die Karosserien appliziert. Die Versorgung der Ringleitungen erfolgt dabei aus zentralen Vorratstanks im Farbmischraum. Der Lack wird üblicherweise mittels einer Zwangsförderung an den Applikationspunkt gefördert. Der Auftrag selber erfolgt häufig mit elektrostatisch aufgeladenen Hochrotationszerstäubern an Dach- und Seitenmaschinen.

An schwer zugänglichen Bereichen werden auch pneumatische Spritzzerstäuber an Robotern oder manuell eingesetzt.

Nach einer gewissen Anzahl lackierter Karosserien und grundsätzlich bei Farbwechseln werden automatisch Spülprogramme mit einem lösemittelbasierenden Spülmedium, insbesondere einer Spül- oder Reinigungszusammensetzung der eingangs genannten Art, ausgelöst. Dabei müssen sämtliche Applikationseinrichtungen wie Hochrotationszerstäuber (Glocken), Handpistolen, Spritzzerstäuber, Versorgungsleitungen und, falls vorhanden, elektrostatische Installationen von frischen, noch nicht ausgehärteten Lackanhaftungen befreit werden.

Während des Reinigungsprozesses, welcher lediglich wenige Sekunden andauernde Kontaktzeiten aufweist, muss das Spülmedium, d.h. die Spül- oder Reinigungszusammensetzung, die Reinigungsaufgabe mit einem befriedigenden Ergebnis bewerkstelligen. Nur beim Erreichen eines annehmbaren Reinigungsergebnisses werden Kontaminationen der Karosserien mit angetrockneten und sich ablösenden Lackresten oder sogar Farbverschleppungen vermieden.

Für diese Reinigungsaufgabe werden häufig Spülmedien eingesetzt, die aus verschiedenen flüchtigen organischen Lösungsmitteln bestehen. Häufig in der Praxis für Standardprodukte eingesetzte Lösemittel sind bspw. Butylacetat, Xylol, n-Butanol, und Mischungen hiervon, und entsprechen insoweit dem eingangs genannten Stand der Technik und bilden den Ausgangspunkt der vorliegenden Erfindung.

Ein allgemeiner Nachteil der herkömmlich verwendeten Komponenten liegt in ihrem hohen Dampfdruck. Sie gehen teilweise in die Umgebungsluft über und werden daher als flüchtige organische Verbindung (VOC, Volatile Organic Compound) bezeichnet. Die Flüchtigkeit von VOC-Verbindungen verstärkt dabei deren ggf. bereits bestehende gesundheitsgefährdende Wirkung durch die Förderung der Exposition von Personen gegenüber dampfförmigen VOC-Anteilen. So ist bspw. Xylol als gesundheitsschädlich mit dem Gefahrensymbol: Gesundheitsgefahr GHS 08, Signalwort "Gefahr" und insbesondere unter H373 - Kann die Organe schädigen bei längerer oder wiederholter Exposition - eingestuft. Xylol weist ferner bei 20°C bereits einen Dampfdruck von ca. 8mbar auf.

Mit dem Einsatz von VOC gehen neben gesundheitlichen, arbeitsphysiologischen und Umweltrisiken insbesondere auch erhebliche olfaktorische Belästigungen bei der Anwendung einher.

Andererseits begünstigt die Flüchtigkeit von VOC-Verbindungen kurze Trocknungszeiten des Spülmediums, was beim Einsatz an Anlagen für einen automatisierten Lackierprozess eigentlich wünschenswert ist.

Bekannte VOC-reduzierte oder VOC-freie Spülmedien weisen hingegen bei sehr kurzen Kontaktzeiten weder eine ausreichende Reinigungskraft noch akzeptable, nämlich kurze Trocknungszeiten auf.

EP 2 669 341 A1 offenbart ein Reinigungsmittel zum Entfernen von Lacken auf Oberflächen, welches mindestens einen Dicarbonsäureester und mindestens ein Antikoagulationsmittel umfasst.

EP 0 743 358 A1 zeigt das Waschen und Reinigen von textilen Substraten in wässrigen Systemen und das Reinigen von harten Metalloberflächen, polymeren Oberflächen und lackierten Oberflächen, mit einer Zusammensetzung enthaltend mindestens einen Dicarbonsäureester, mindestens eine waschwirksame, vor allem nichtionische, und/oder anionische grenzflächenaktive Substanz, und gegebenenfalls Wasser und/oder weitere Zusätze.

DE 10 2012 013137 A1 betrifft ein Demarkierungsmittel auf Basis eines aromatischen Alkohols und eines dibasischen Esters, bevorzugt in Kombination mit mindestens einem weiteren dibasischen Ester.

AU 2014 201 248 A1 offenbart zur Entfernung von Graffiti eine Zusammensetzung auf Wasserbasis mit niedrigem VOC-Gehalt, die Wasser, Glykolether EB (Butylglycol), Aceton, DBE, Essigsäure und eine geringe Menge an Duftstoffen enthält. Der VOC-Gehalt dieser Zusammensetzung ist kleiner oder gleich 15,5 %.

Der vorliegenden Erfindung liegt die Aufgabe zugrunde, ein Spülmedium vorzuschlagen, mit dem auch bei kurzen Kontaktzeiten eine Entfernung von Lackanhaftungen mit hoher Reinigungskraft und -spontanität, verbesserter Umweltverträglichkeit und verminderten arbeitsphysiologischen Beeinträchtigungen bei gleichzeitig akzeptablen Trocknungszeiten realisiert ist.

Einen Beitrag zur Lösung der vorstehend genannten Aufgabe leistet eine Stoffzusammensetzung, welche durch die kennzeichnenden Merkmale des Anspruchs 1 weitergebildet ist.

Erfindungsgemäße Verwendungen der Stoffzusammensetzung werden mit den Merkmalen der Ansprüche 8, 10 und 13 vorgeschlagen.

Vorteilhafte Ausgestaltungen und Weiterbildungen der Erfindung sind Gegenstand der nachgeordneten Ansprüche.

Im Rahmen der vorliegenden Erfindung wird eine Stoffzusammensetzung der eingangs genannten Art vorgeschlagen, welche die folgenden Komponenten aufweist: (1) mindestens ein organisches Lösungsmittel mit VOC-Eigenschaften, nämlich mit einem Dampfdruck von 0,1 mbar oder mehr bei 293,15 Kelvin, wobei Komponente (1) ausgewählt ist aus der Gruppe: Butylacetat, Xylol, 1-Methoxy-2-propanol, n-Butanol, eine Mischung aus mindestens zwei hiervon, und wobei der Anteil der Komponente (1) an der gesamten Zusammensetzung 30 - 85 Massen-% (Ma.-%) beträgt; (2) mindestens ein dibasischer Ester, wobei der Anteil der Komponente (2) an der gesamten Zusammensetzung 15 - 40 Massen-% beträgt.

Zunächst ist gefunden worden, dass der Zusatz von dibasischen Estern in konkreten Massenanteilen zu einer konventionellen Spülzusammensetzung ein Spülmedium mit überraschend hoher Reinigungskraft und -spontanität bereitstellt. So kann in überraschender Weise ein Spülmedium auch für kurze Kontaktzeiten bereitgestellt werden, welches eine deutliche VOC-Reduzierung ermöglicht.

Bislang ist der Einsatz von VOC-reduzierten oder -freien Spülmedien insbesondere in der Automobilindustrie, und dort in Lackierstraßen o.ä., nicht bekannt, da hierfür bisher keine entsprechenden Erfolgsaussichten gesehen worden sind.

Gleichzeitig zeigt die erfindungsgemäße Stoffkombination überraschend nach der Anwendung trotz der VOC-Reduzierung akzeptabel kurze Trocknungszeiten.

In überraschender Weise hat sich des Weiteren gezeigt, dass der Materialeinsatz innerhalb des erfindungsgemäßen Spülmediums, gegenüber bisher bekannten, konventionellen Spülmedien deutlich verringerbar ist. So sind Reduzierungen des Verbrauchs an Spülmedium bis ca. 20% möglich, und das bei einem hervorragenden Reinigungsergebnis.

Die Reduzierung des VOC-Gehaltes des erfindungsgemäßen Spülmediums zeigt weiterhin ein überraschend hohes Lösevermögen gegenüber angetrockneten Lacken, was insbesondere bei der manuellen Reinigung von Lackansatzbehältern und Applikationseinrichtungen sehr von Vorteil ist.

Folglich ist mit dem erfindungsgemäßen Spülmedium auch bei kurzen Kontaktzeiten die Entfernung von Lackanhaftungen mit hoher Reinigungskraft und -spontanität bei geringerem Rohstoffeinsatz, verbesserter Umweltverträglichkeit und verminderten arbeitsphysiologischen Beeinträchtigungen realisiert, wobei ebenfalls akzeptable Trocknungszeiten erreicht werden.

Es sind für sich gesehen bereits VOC-reduzierte flüssige Spül- oder Reinigungszusammensetzungen auf Basis organischer Lösungsmittel bekannt, welche dibasische Ester aufweisen. Dibasische Ester liegen dabei zumeist in einer synthesebedingten Mischung aus Dimethylsuccinat, Dimethylglutarat und Dimethyladipat vor. Eine solche Mischung wird in der vorliegenden Anmeldung als DBE bezeichnet. DBE weist bei 20°C einen Dampfdruck von ca. 0,08mbar auf und kann damit als VOC-frei gelten.

Ein von der Anmelderin unter der Bezeichnung Nikutex^{®} 2612 vertriebenes Produkt weist gemäß zugehörigem Sicherheitsdatenblatt in der Version 7.0.0. vom 15.10.2015 auf: DBE 50 - 75 Massen-% (Ma.-%), n-Butylacetat 10 - 20 Ma.-%, Xylol 5 - 10 Ma.-%, 1-Methoxy-2-propanol 5 - 10 Ma.-%, Butyldiglycol 5 - 10 Ma.-%. Dieses Produkt weist lediglich eine geringe Reinigungsspontanität auf und benötigt eine lange Trocknungszeit. Es eignet sich daher nur für die manuelle Anwendung mit langen Kontakt- und Trocknungszeiten und wird daher gerade nicht für einen Einsatz an Anlagen für einen automatisierten Lackierprozess in Betracht gezogen, und ist folglich nicht Ausgangspunkt der vorliegenden Erfindung.

Als flüchtige organische Verbindung oder "VOC" werden im Rahmen der vorliegenden Erfindung organische Verbindungen aufgefasst, die bei 293,15 Kelvin einen Dampfdruck von 0,1 mbar oder mehr aufweisen, und zwar in Übereinstimmung mit der Definition It. § 2 Nr. 11 der 31. Verordnung zur Durchführung des Bundes-Immissionsschutzgesetzes (31. BImSchV) vom 21.08.2001.

Als "flüssige" Zusammensetzung wird im Rahmen der vorliegenden Anmeldung eine Stoffzusammensetzung verstanden, welche zumindest bei herrschenden Normalbedingungen von 293,15 K und 1,013 bar und somit im Bereich der üblichen Anwendungsbedingungen einen flüssigen Aggregatzustand zeigt.

Im Folgenden werden die erfindungsgemäßen Aspekte weiter erörtert, wozu teilweise auf nicht limitierende vorteilhafte Ausgestaltungen und Weiterbildungen der Erfindung Bezug genommen wird. Die Merkmale vorteilhafter Weiterbildungen lassen sich dabei einzeln oder auch in beliebiger Kombination realisieren, wodurch weitere vorteilhafte Ausgestaltungen der Erfindung geschaffen werden. Eine Zusammenstellung von ergänzenden bzw. zusätzlichen, nicht limitierenden, konkreten bevorzugten Ausführungsformen der Erfindung findet sich überdies am Ende des allgemeinen Teils der Beschreibung. Auf diese Zusammenstellung wird ausdrücklich verwiesen.

In einer ersten vorteilhaften Weiterbildung beträgt der Anteil der Komponente (2) an der gesamten Zusammensetzung 20 - 30 Ma.-%.

Vorzugsweise ist die Komponente (2) ausgewählt aus der Gruppe: Dimethylsuccinat, Dimethylglutarat, Dimethyladipat, eine Mischung aus mindestens zwei hiervon.

Das erfindungsgemäße Spülmedium kann dibasische Ester in unterschiedlicher Zusammensetzung aufweisen. Bevorzugt besteht Komponente (2) für sich gesehen aus: Dimethylsuccinat 10 - 25 Ma.-%, Dimethylglutarat 50 - 67 Ma.-%, Dimethyladipat 10 - 35 Ma.-%, wobei die Massenanteile sich auf die Gesamtmasse von Komponente (2) beziehen und die Summation der Massenanteile 100,0 Ma.-% beträgt. Diese Mischungspartner und Anteile entsprechen dabei der üblichen Zusammensetzung der bereits erläuterten, synthesebedingten Mischung DBE.

Hinsichtlich einer weiter verbesserten Reinigungswirkung ist bevorzugt, dass Komponente (1) teilweise oder vollständig von Butylacetat gebildet wird. In einer besonders bevorzugten Ausführungsform weist das erfindungsgemäße Spülmedium Butylacetat mit einem Anteil von etwa oder genau 56 Ma.-% auf.

Ebenfalls bevorzugt ist das Vorhandensein von 1-Methoxy-2-propanol in Komponente (1). Diese Verbindung besitzt aufgrund ihrer Polarität lösungsvermittelnde Eigenschaften und vermag bei Zwei-Komponenten-Lacken die Härterreaktion zu verlangsamen. Besonders bevorzugt ist dabei ein Anteil an 1-Methoxy-2-propanol von etwa oder genau 5 Ma.-% an der gesamten Stoffzusammensetzung.

In einer bevorzugten Ausführungsform weist das erfindungsgemäße Spülmedium im Rahmen von Komponente (1) Xylol mit einem Anteil von etwa oder genau 9 Ma.-% an der gesamten Stoffzusammensetzung auf.

In vorteilhafter Weise kann die erfindungsgemäße Zusammensetzung 1 - 40 Ma.-% einer zusätzlichen VOC-freien Komponente (3): mindestens ein Glycolether mit 8-10 C-Atomen aufweisen.

Der Anteil der Komponente (3) an der gesamten Zusammensetzung kann dabei bevorzugt 1 - 15 Massen-% betragen.

Ferner ist bevorzugt, dass Komponente (3) Butyldiglycol ist. Sowohl dibasische Ester, insbesondere DBE (Reaktionsmasse aus Dimethylsuccinat, Dimethylglutarat und Dimethyladipat) als auch Butyldiglycol weisen einen Dampfdruck von weniger als 0,1 mbar bei Raumtemperatur auf und gelten somit als VOC-frei. Im Ergebnis ist so eine weitere VOC-Reduktion des erfindungsgemäßen Spülmediums ermöglicht. Es hat sich gezeigt, dass der Zusatz von Butyldiglycol die Reinigungskraft des Spülmediums in überraschender Weise weiter erhöht. Im Speziellen ist für die beiden Komponenten (2): dibasische(r) Ester und (3): Butyldiglycol in einer Mischung ein weiterer positiver Effekt auf die Reinigungswirkung beobachtet worden.

In einer bevorzugten Ausführungsform weist das erfindungsgemäße Spülmedium Butyldiglycol mit einem Anteil von etwa oder genau 5 Ma.-% an der gesamten Stoffzusammensetzung auf.

Weiter bevorzugt ist dabei eine Ausgestaltung, in der das Spülmedium eine Mischung aus zumindest einem dibasischen Ester und Butyldiglycol aufweist, wobei die Anteile von dibasischen Estern und Butyldiglycol einem Verhältnis von etwa oder genau 5:1 entsprechen. Es sind mit Ausführungsbeispielen gute Ergebnisse erzielt worden, welche fünf Teile dibasische Ester (als Mischung DBE) zu einem Teil Butyldiglycol im Spülmedium aufgewiesen haben.

Besonders bevorzugt ist eine Ausgestaltung der Stoffzusammensetzung, welche Butylacetat, dibasische Ester und Butyldiglycol aufweist. Dabei kann ein vergleichsweise höherer Anteil von Butylacetat und eine geringere Zugabe von dibasischen Estern, insbesondere DBE, und von Butyldiglycol hervorragende Ergebnisse liefern. Alternativ oder zusätzlich zu Butylacetat können weitere organische Lösemittel enthalten sein, wie bspw. Xylol oder andere gängige VOC-Lösemittel, ohne den Rahmen der Erfindung zu verlassen.

So kann zusätzlich oder alternativ, insbesondere im Hinblick auf eine weiter verbesserte Reinigungswirkung, auch die Zugabe von Xylol oder Alkoholen mit 3-4 C-Atomen zweckmäßig sein. Weiterhin können alternativ oder zusätzlich zu Alkoholen und/oder Butyldiglycol auch weitere Glycolether enthalten sein.

Die Zusammensetzung einer im Hinblick auf hervorragende Reinigungswirkung und -spontanität sowie geringe Umwelt- und arbeitsphysiologische Beeinträchtigungen besonders bevorzugten Ausführungsform der erfindungsgemäßen Stoffzusammensetzung wird wie folgt angegeben:

| | |
|---|---|
| DBE | 15 - 40 Ma.-% |
| Butylacetat | 30 - 85 Ma.-% |
| Xylol | 0 - 20 Ma.-% |
| 1-Methoxy-2-propanol | 0 - 15 Ma.-% |
| Butyldiglycol | 0 - 40 Ma.-% |

Im Rahmen der Erfindung ferner vorgeschlagen wird die Verwendung einer Stoffzusammensetzung gemäß der vorliegenden Erfindung zur - insbesondere periodischen - Spülung und Reinigung von lackführenden Teilen von:
- Anlagen für einen kontinuierlichen Spritzlackierprozess, und/oder
- Lackierstrecken, und/oder
- Lackierstraßen, insbesondere Karosserielackierstraßen, und/oder
- Anlagen für elektrostatische Spritzverfahren.

Als besonders vorteilhaft erweist sich dabei eine Verwendung der Stoffzusammensetzung zur Spülung und Reinigung von:
- lackführenden Versorgungs- oder Ringleitleitungen von Anlagen für einen kontinuierlichen Spritzlackierprozess, und/oder
- Lack-Hochrotationszerstäubern (Glocken), und/oder
- Lack-Spritzzerstäubern, und/oder
- Lackier-Handpistolen.

Allgemein, und insbesondere im Zusammenhang mit einer oder beiden der letztgenannten Verwendungen, erweist sich die ebenfalls erfindungsgemäße Verwendung einer erfindungsgemäßen Stoffzusammensetzung bei einem Verfahren zur Spülung und Reinigung mit kurzen Kontaktzeiten der Stoffzusammensetzung mit zu reinigenden Teilen als besonders vorteilhaft. Bei den zu reinigenden Teilen kann es sich insbesondere um Teile mit nicht ausgehärteten Lackanhaftungen handeln. Zu reinigende Teile können mit der erfindungsgemäßen Stoffzusammensetzung - insbesondere im Rahmen eines Spülvorgangs - über vergleichsweise kurze Kontaktzeiten in Berührung gebracht werden. Trotz kurzer Kontaktzeiten lässt sich dabei ein sehr gutes Reinigungsergebnis erzielen.

Trotz niedrigem VOC-Gehalt werden dabei auch für den Fall kurzer zur Verfügung stehender Trocknungszeiten gute Abtrocknungsergebnisse der Stoffzusammensetzung nach dem Spülvorgang erzielt.

Die o.g. Kontaktzeit eines Spülvorgangs beträgt dabei 0,5 - 20 Sekunden (s), und kann insbesondere 1 - 10s, insbesondere 1 - 5s, insbesondere 1 - 4s, und insbesondere 1,5 - 4s betragen.

Die Verwendung einer erfindungsgemäßen Stoffzusammensetzung bei einem Verfahren zur periodischen Spülung und Reinigung von zu reinigenden Teilen ist ebenfalls erfindungsgemäß; ein solches Verfahren kann ferner zusätzlich Merkmale der Verfahren im Rahmen der bereits oben erläuterten Verwendungen aufweisen.

In einer bevorzugten Ausgestaltung beträgt die Dauer einer Spülperiode dabei 0,5 - 2s, und insbesondere 1s.

Die gesamte Kontaktzeit eines Spülvorgangs ergibt sich dabei aus der Anzahl der jeweiligen Spülperioden multipliziert mit der Dauer einer Spülperiode.

Als bevorzugt angesehen wird dabei eine Abfolge von 4 - 5 Spülperioden im Rahmen eines Spülvorgangs.

Jede Spülperiode kann dabei von einer Periode der Beaufschlagung mit Pulsluft (Druckluft) gefolgt werden. Die Pulsluft führt zu einem Freiblasen der Teile von Spülmittel- und Lackresten. Eine Periode der Pulsluft kann dabei bevorzugt dieselbe Dauer aufweisen wie eine Spülperiode.

Ein bevorzugter Spülvorgang im periodischen Verfahren ergibt sich demnach z.B. zu einer Spülperiode (Spülen mit der erfindungsgemäßen Stoffzusammensetzung) mit einer Dauer von 1s, gefolgt von einer Periode mit Pulsluft mit einer Dauer von 1s; vorzugsweise in einer Abfolge von 4 - 5 Wiederholungen.

### Beispiele

Erfindungsgemäße, jedoch nicht einschränkende Beispiele werden durch die in Tabelle 1 angegebenen Zusammensetzungen der Beispiele B1 - B5 angegeben. Das Vergleichsbeispiel VB1 gibt eine übliche Zusammensetzung eines Spülmediums für kurze Kontaktzeiten und damit den Ausgangspunkt des Stands der Technik wieder. VB2 gibt eine Zusammensetzung des Produkts "Nikutex 2612" der Anmelderin wieder, welches sich nicht für eine Anwendung mit kurzen Kontakt- und Trocknungszeiten eignet.

**Tabelle 1: Beispiele von erfindungsgemäßen Stoffzusammensetzungen und Vergleichsbeispiele des Stands der Technik. Alle Werte beziehen sich auf Massenanteile in Prozent (Ma.-%), bezogen auf die Gesamtmasse der jeweiligen Zusammensetzung. DBE ist eine handelsübliche, synthesebedingte Mischung aus Dimethylsuccinat, Dimethylglutarat und Dimethyladipat mit der folgenden Zusammensetzung (bezogen auf die Gesamtmasse an DBE): Dimethylsuccinat 15,0 Ma.-%, Dimethylglutarat 52,5 Ma.-% Dimethyladipat 32,5 Ma.-%. Xylol bezeichnet eine handelsübliches Isomerengemisch aus o-, m- und p-Xylol. 1-Methoxy-2-propanol kann auch als Methoxypropanol bezeichnet werden, Butyldiglycol auch als 2-(2-Butoxyethoxy)-ethanol.**

| Beispiel | B1 | B2 | **B3** | B4 | B5 | VB1 | VB2 |
|---|---|---|---|---|---|---|---|
| DBE | 15,0 | 20,0 | **25,0** | 30,0 | 40,0 | - | 65,0 |
| Butylacetat | 66,0 | 61,0 | **56,0** | 51,0 | 41,0 | 80,0 | 16,0 |
| Xylol | 9,0 | 9,0 | **9,0** | 9,0 | 9,0 | 20,0 | 9,0 |
| 1-Methoxy-2-propanol | 5,0 | 5,0 | **5,0** | 5,0 | 5,0 | - | 5,0 |
| Butyldiglycol | 5,0 | 5,0 | **5,0** | 5,0 | 5,0 | - | 5,0 |
| Σ | 100,0 | 100,0 | **100,0** | 100,0 | 100,0 | 100,0 | 100,0 |

### Versuche

Im Rahmen mehrerer Versuchsreihen ist die Lackverträglichkeit sowie die Reinigungswirkung der erfindungsgemäßen Stoffzusammensetzung (flüssiges Spülmedium) untersucht worden.

Zur Durchführung der Versuchsreihen wurde die in Tabelle 1 offenbarte erfindungsgemäße Zusammensetzung gemäß **Beispiel B3** gegenüber den **Vergleichsbeispielen VB1 und VB2** untersucht.

### Versuch 1

Versuch 1 diente der Überprüfung der Lackverträglichkeit des erfindungsgemäßen Spülmediums. Dazu sind saubere, unlackierte Stahlbleche im A5-Format viermal mit jeder zu untersuchenden Reinigungslösung abgespült und zwischen den Spülvorgängen in waagrechter Lage getrocknet worden. Die Trocknung wurde dabei im Umluftofen bei 50°C beschleunigt.

Danach wurden die getrockneten Versuchsbleche mit herkömmlichen, in der Automobilindustrie verwendeten Lacken lackiert.

Nach Abtrocknung der Lackschicht wurden die lackierten Versuchsbleche bei guter Beleuchtung (Tageslicht bzw. Neonbeleuchtung) optisch untersucht. Sollten dabei Krater oder andere Unverträglichkeiten festgestellt werden, wäre die Prüfung zu wiederholen. Würden auch bei einer zweiten Prüfung Krater auftreten, wäre das Spülmedium für diese Reinigungsaufgabe ungeeignet.

Das Ergebnis zu Versuch 1 zeigte jedoch, dass die Zusammensetzungen gem. Beispiel B3 sowie gemäß den Vergleichsbeispielen VB1 und VB2 keine Lackstörungen zeigten und daher mit standardmäßig eingesetzten Lacken verträglich sind.

### Versuch 2

In der zweiten Versuchsreihe ist die Reinigungswirkung des erfindungsgemäßen Spülmediums gemäß Beispiel B3 im Vergleich zu denjenigen gemäß den Vergleichsbeispielen VB1 und VB2 untersucht worden. Um zur Beurteilung der Lösekraft für Lackanhaftungen gleiche Versuchsbedingungen vorzugeben und innerhalb einer Versuchsreihe Ergebnisse vergleichen zu können, ist dabei wie folgt verfahren worden.

Die Lösefähigkeit der untersuchten Spülmedien ist mit Hilfe einer speziell konzipierten Apparatur geprüft worden. Die Apparatur besteht aus
- einem Gestell,
- Klemmvorrichtungen,
- zwei bis drei Büretten mit Hahn,
- einer etwa 20 cm breiten und etwa 60 cm langen Glasscheibe, und
- einer Auffangvorrichtung.

Die Büretten sind mit Hilfe der Klemmvorrichtungen senkrecht befestigt worden. Dabei wurden die Büretten so justiert, dass der Abstand vom Bürettenhahn zu der Aufprallstelle auf der Glasscheibe exakt 100 mm betrug. Die Büretten sind mit dem zu prüfenden Spülmedium befüllt worden. Die Glasscheibe hat dabei in einem Winkel von 45° im Gestell aufgelegen.

Der verarbeitungsfertig eingestellte Lack ist dann vorsichtig mit einer Schichtstärke von 60µm auf der Glasscheibe aufgerakelt worden, wobei die Glasscheibe im Bereich der Tropf- bzw. Aufprallstelle in einem ca. 6cm - ca. 8cm breiten Streifen beschichtet worden ist.

Nach einer Wartezeit von 30 Sekunden (30s) wurde das Spülmedium auf die mit dem Lack versehene Stelle der Glasscheibe getropft, wobei die Tropffrequenz ca. 1 Tropfen pro Sekunde betragen hat. Im Rahmen des Versuchs wurde die Anzahl der Tropfen bis zur vollständigen Ablösung des frischen Lacks an der Tropf- bzw. Aufprallstelle bestimmt.

Die mit der zweiten Versuchsreihe erhaltenen Ergebnisse sind Tabelle 2 zu entnehmen. Die Anzahl der Tropfen, die bis zur Ablösung des Lackes benötigt wurden, steht dabei im umgekehrten Verhältnis zur Lösekraft des jeweiligen Spülmediums.

**Tabelle 2: Ergebnisse der zweiten Versuchsreihe. Verglichen wird die Lösekraft für Lacke einer erfindungsgemäßen Zusammensetzung gemäß Beispiel B3 mit den Zusammensetzungen gemäß Vergleichsbeispielen VB1 (Standardprodukt) und VB2.**

| Beispiel | **B3** | VB1 | VB2 |
|---|---|---|---|
| Standard-Basecoat, rot, Trockenzeit 30s, benötigte Tropfenzahl | 6 Tropfen | 8 Tropfen | 10 Tropfen |
| Standard-Basecoat, weiß, Trockenzeit 30s, benötigte Tropfenzahl | 6 Tropfen | 8 Tropfen | 10 Tropfen |
| Standard-Basecoat, blau, Trockenzeit 30s, benötigte Tropfenzahl | 6 Tropfen | 8 Tropfen | 10 Tropfen |
| Standard-Füller, weiß, Trockenzeit 30s, benötigte Tropfenzahl | 8 Tropfen | 10 Tropfen | 12 Tropfen |

Die Ergebnisse der zweiten Versuchsreihe in Bezug auf Standard-Basecoats in rot, weiß und blau zeigen, dass im Vergleich zu dem Standardprodukt bereits 75% des Rohstoffeinsatzes des Spülmediums gemäß Beispiel B3 ausreichen, um ein mit dem relevanten Vergleichsbeispiel VB1 zumindest gleichwertiges Reinigungsergebnis zu erzielen.

Die Ergebnisse der zweiten Versuchsreihe in Bezug auf Standard-Füller in weiß zeigen, dass im Vergleich zu dem Standardprodukt VB1 bereits 80% des Rohstoffeinsatzes des Spülmediums gemäß Beispiel B3 ausreichen, um ein mit dem relevanten Vergleichsbeispiel VB1 zumindest gleichwertiges Reinigungsergebnis zu erzielen.

### Versuch 3

Hier entsprachen Aufbau und Durchführung dem von Versuch 2, allerdings mit einer Wartezeit von 5 min, um die Reinigungswirkung gegenüber angetrocknetem Lack zu prüfen.

**Tabelle 3: Ergebnisse der dritten Versuchsreihe. Verglichen wird die Lösekraft für Lacke einer erfindungsgemäßen Zusammensetzung gemäß Beispiel B3 mit den Zusammensetzungen gemäß Vergleichsbeispielen VB1 (Standardprodukt) und VB2.**

| Beispiel | **B3** | VB1 | VB2 |
|---|---|---|---|
| Standard-Basecoat, rot, Trockenzeit 5min, benötigte Tropfenzahl | 8 Tropfen | 8 Tropfen | 12 Tropfen |
| Standard-Basecoat, weiß, Trockenzeit 5min, benötigte Tropfenzahl | 8 Tropfen | 8 Tropfen | 12 Tropfen |
| Standard-Basecoat, blau, Trockenzeit 5min, benötigte Tropfenzahl | 8 Tropfen | 8 Tropfen | 12 Tropfen |
| Standard-Füller, weiß, Trockenzeit 5min, benötigte Tropfenzahl | 9 Tropfen | 10 Tropfen | 14 Tropfen |

Die Ergebnisse der dritten Versuchsreihe in Bezug auf Standard-Basecoats in rot, weiß und blau zeigen, dass im Vergleich zu dem Standardprodukt eine identische Menge des Spülmediums gemäß Beispiel B3 ausreicht, um ein mit dem relevanten Vergleichsbeispiel VB1 zumindest gleichwertiges Reinigungsergebnis zu erzielen.

Die Ergebnisse der dritten Versuchsreihe in Bezug auf Standard-Füller in weiß zeigen, dass im Vergleich zu dem Standardprodukt bereits 90% des Rohstoffeinsatzes des Spülmediums gemäß Beispiel B3 ausreicht, um ein mit dem relevanten Vergleichsbeispiel VB1 zumindest gleichwertiges Reinigungsergebnis zu erzielen.

### Versuch 4

In der vierten Versuchsreihe ist die Reinigungswirkung des erfindungsgemäßen Spülmediums gemäß Beispiel B3 im Vergleich zu denjenigen gemäß Vergleichsbeispielen VB1 (Standardprodukt) und VB2 untersucht worden. Um zur Beurteilung der Spülwirkung gegenüber "frischem" Lack gleiche Versuchsbedingungen vorzugeben und innerhalb einer Versuchsreihe Ergebnisse vergleichen zu können, ist dabei wie folgt verfahren worden.

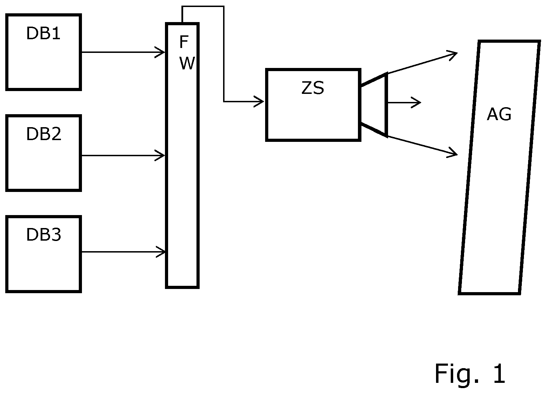

Die Spülwirkung der untersuchten Spülmedien ist mit Hilfe einer sehr praxisnahen Lackapplikationsapparatur geprüft worden. Diese Versuchsapparatur wird zusätzlich anhand der schematischen Darstellung in **Figur 1** erläutert.

Die genannte Apparatur besteht aus:
- 2 Druckbehältern für die Lackversorgung (Druckbehälter DB1 + DB2)
- 1 Druckbehälter für die Versorgung mit Spülmedium (Druckbehälter DB3)
- Farb- und Spüler führenden Leitungen mit Farbwechsler FW
- Einem Hochrotationszerstäuber ZS der Fa. DÜRR
- Einer Absaugvorrichtung, sowie einem darin montierten Gestell AG zum Auffangen des Lackausstoßes nach einem Farbwechsel.

Der verarbeitungsfertige, rote Lack wird in den Druckbehälter DB1 gefüllt, und der verarbeitungsfertige, weiße Lack wird in den Druckbehälter DB2 gefüllt. Das zu prüfende Spülmedium wird dagegen in den Druckbehälter DB3 gefüllt.

Versuchsablauf für Versuch 4:
- 30s Lackiervorgang mit DB1, rotem Lack. Das Auffanggestell AG wird zunächst nicht verwendet.
- 10s Spülvorgang nach festen Parametern mit DB3, dem zu prüfenden Spülmedium.
- 10s Lackiervorgang mit DB2, weißem Lack. Der verspritzte Lack wird auf einem auf dem Auffanggestell AG montierten, zuvor gereinigten Stahlblech (DIN A4 - Format) aufgefangen.

Das nach Durchführung des beschriebenen Versuchsablaufs erhaltene Stahlblech samt appliziertem weißem Lack wird auf rote Farbeinschlüsse/-verschleppungen hin beurteilt. Der Versuch wird nacheinander mit dem erfindungsgemäßen Spülmedium gemäß Beispiel B3, dem relevanten Standardprodukt gemäß Vergleichsbeispiel VB1 sowie der Zusammensetzung gemäß Vergleichsbeispiel VB2 durchgeführt, und die Ergebnisse werden verglichen.

Die in der vierten Versuchsreihe erhaltenen Ergebnisse sind aus Tabelle 4 zu entnehmen. Je geringer die Anzahl an roten Farbtropfen / Verfärbungen (d.h. Verunreinigungen) ist, desto besser ist das erzielte Spülergebnis:

**Tabelle 4: Ergebnisse für Versuch 4, zur Erläuterung vgl. obige Beschreibung.**

| Spülmedium gemäß Beispiel | **B3** | VB1 | VB2 |
|---|---|---|---|
| festgestellte Anzahl roter Farbtropfen | 2 Tropfen | 3 Tropfen | 6 Tropfen |

### Versuch 5

Die fünfte Versuchsreihe befasst sich mit dem Spülvermögen des Spülmediums mit dem frischen Lack unter Berücksichtigung von für die lackverarbeitende Industrie, speziell die Autoindustrie, vorteilhafter Spülprozesse. Dabei werden kurze Kontaktzeiten des Spülmediums mit den zu entfernenden Lackanhaftungen realisiert. Verglichen wurde das erfindungsgemäße Spülmedium gemäß Beispiel B3 mit den Vergleichsbeispielen VB1 (Standardprodukt) und VB2.

Die Spülwirkung der untersuchten Spülmedien ist mit Hilfe einer sehr praxisnahen Lackapplikationsapparatur geprüft worden. Hierzu wurde die Versuchsapparatur aus Versuch 4, erläutert anhand der schematischen Darstellung in Figur 1, eingesetzt. Allerdings wurde kein Gestell AG verwendet, da es hier im Unterschied zu Versuch 4 nicht auf die Beurteilung eines Lackauftrags nach einem vorherigen Spülvorgang ankommt, sondern auf den Nachweis von nach einem Spülvorgang noch in den lackführenden Teilen der Apparatur feststellbaren Lackresten.

Der verarbeitungsfertige Lack wird in den Druckbehälter DB1 gefüllt. Das zu prüfende Spülmedium dagegen in den Druckbehälter DB3.

Versuchsablauf für Versuch 5:
- 30s simulierter Lackiervorgang (Lackaustrag aus ZS) mit dem in DB1 eingefüllten Lack,
- 10s Spülvorgang A oder B mit dem zu prüfenden Spülmedium aus DB3, das dabei aus ZS ausgetragene Spülmedium mit Lackresten wird verworfen,
- 5s Spülvorgang, nur Spülmedium, wobei das aus ZS ausgetragene Spülmedium aufgefangen wird.

Das nach Durchlauf des beschriebenen Versuchsablaufs aufgefangene Spülmedium des 5s-Spülvorgangs wird mittels UV/VIS-Spektrometer auf Verfärbung durch den verwendeten Lack geprüft und damit die Vollständigkeit des zuerst (für 10s) durchgeführten Spülvorgangs ermittelt.

Bei der Ermittlung einer Verfärbung (durch Lackreste) des für 5s eingesetzten und aufgefangenen Spülmediums wird dabei die Transmission von Licht durch dieses Medium ermittelt und in prozentualen Werten angegeben. Mit anderen Worten enthalten die nachfolgenden Tabellen 5 und 6 jeweils eine Angabe, welche Menge Licht einer bestimmten Wellenlänge durch die zu prüfende Flüssigkeit dringt.

Die Wellenlänge ist u.a. abhängig von der Pigmentierung des zu prüfenden Lackes. 100% Transmission entsprechen somit einer "sauberen" Lösung ohne Lackreste bzw. einer Lösung, die kein Licht vorgegebener Wellenlänge absorbiert und somit keinen Lack mehr enthält. Dies entspricht einem optimalen Spülergebnis.

Je niedriger der prozentuale Wert ist, desto mehr Licht wird absorbiert, und desto mehr Lackverunreinigungen sind noch in dem 5s-Spülmedium enthalten, welche nicht durch den eigentlichen 10s-Spülvorgang entfernt werden konnten.

Der Versuch wird nacheinander mit dem erfindungsgemäßen Spülmedium gemäß Beispiel 3, dem relevanten Beispielprodukt gemäß Vergleichsbeispiel VB1 sowie der Zusammensetzung gemäß Vergleichsbeispiel VB2 durchgeführt, und die erhaltenen Ergebnisse werden verglichen.

Der Versuch wird mit Standard-Basecoat, rot und Standard-Basecoat, blau durchgeführt.

Weiterhin wird der erste Spülvorgang verändert, um den Einfluss einer verringerten Spülmittelmenge auf das Reinigungsergebnis zu untersuchen.
Spülvorgang A: Gesamtdauer 10s
   - 1,0s Spülmedium
   - 1,0s Pulsluft
   - Vorgang insgesamt 5 Mal durchführen.
Spülvorgang B: Gesamtdauer 10s, Spülmittelmenge um ca. 20% reduziert
   - 1,0s Spülmedium
   - 1,0s Pulsluft
   - Vorgang insgesamt 4 Mal durchführen.

Dabei beträgt die während obigen Versuchs in der verwendeten Apparatur im Spülzyklus während 1,0s durchgesetzte Menge an Spülmedium ca. 16ml, die während des gesamten Spülvorgangs A eingesetzte Menge an Spülmedium ca. 80ml, bei Spülvorgang B beträgt diese ca. 64ml.

Die in der fünften Versuchsreihe erhaltenen Ergebnisse sind aus Tabelle 5 (Spülvorgang A) und Tabelle 6 (Spülvorgang B) zu entnehmen. Je höher der prozentuale Wert zur Vollständigkeit des Spülvorgangs ist, desto besser ist das erzielte Spülergebnis:

**Tabelle 5: Ergebnisse für Versuch 5 Spülvorgang A, zur Erläuterung vgl. obige Beschreibung**

| Spülmedium gemäß Beispiel | **B3** | VB1 | VB2 |
|---|---|---|---|
| Standard-Basecoat, rot | 99,0 % | 97,0 % | 93,0 % |
| Standard-Basecoat, blau | > 99,5 % | 98,0 % | 95,0 % |

**Tabelle 6: Ergebnisse für Versuch 5 Spülvorgang B, zur Erläuterung vgl. obige Beschreibung**

| Spülmedium gemäß Beispiel | **B3** | VB1 | VB2 |
|---|---|---|---|
| Standard-Basecoat, rot | 98,5 % | 94,0 % | 87,0 % |
| Standard-Basecoat, blau | 99,5 % | 96,0 % | 89,0 % |

### Versuch 6

Die sechste Versuchsreihe befasst sich mit überraschenderweise möglichen, teils äußerst kurzen Kontaktzeiten des erfindungsgemäßen Spülmediums mit dem zu entfernenden Lack. Verglichen wurde erneut das erfindungsgemäße Spülmedium gemäß Beispiel B3 mit den Vergleichsbeispielen VB1 (Standardprodukt) und VB2.

Die Spülwirkung der untersuchten Spülmedien ist mit Hilfe einer sehr praxisnahen Lackapplikationsapparatur geprüft worden. Hierzu wurde die Versuchsapparatur aus Versuch 4 und 5, erläutert anhand der schematischen Darstellung in Figur 1, eingesetzt; allerdings ohne Gestell AG.

Ferner ist hier im Unterschied zu Versuch 5 alleine das Spülergebnis in Bezug auf den Hochrotationszerstäuber ZS untersucht worden. Dazu wurde das Spülmedium aus DB3 mittels einer Bypassleitung (in Figur 1 nicht dargestellt) unter Umgehung des Farbwechslers FW dem Hochdruckzerstäuber direkt zugeführt. Dadurch lässt sich der Einfluss der Volumina von Farbwechsler FW und lackführenden Leitungen auf das Spülergebnis des Versuchs minimieren bzw. neutralisieren.

Der verarbeitungsfertige Lack wird in den Druckbehälter DB1 gefüllt. Das zu prüfende Spülmedium dagegen in den Druckbehälter DB3.

Versuchsablauf für Versuch 6:
- 3s simulierter Lackiervorgang (Lackaustrag aus ZS) mit dem in DB1 eingefüllten Lack,
- 3s Pause bei voller Drehzahl des Hochrotationszerstäubers (ca. 25.000 U/min)
- 1,5s Spülvorgang von ZS mit dem zu prüfenden Spülmedium aus DB3, direkt von DB3 durch o.g. Bypassleitung an ZS zugeführt,
- 60s Pause bei voller Drehzahl des Hochrotationszerstäubers (ca. 25.000 U/min)
- Demontage der Zerstäuberglocke und Bewertung der Reinigungswirkung.

Die anfängliche Pause von 3s nach dem Lackaustrag bei voller Drehzahl des Zerstäubers gestattet dabei bereits ein leichtes Antrocknen der Lackanhaftungen, was für den beschriebenen Fall äußerst praxisrelevant ist, die Reinigungsaufgabe andererseits jedoch natürlich erschwert. Die Pause von 60s nach dem Spülen ermöglicht ein Abtrocknen der Glocke von dem verwendeten Spülmedium.

Die nach Durchführung des beschriebenen Versuchsablaufs demontierte Glocke wird optisch auf Sauberkeit und Restfeuchte beurteilt. Der Versuch wird nacheinander mit dem erfindungsgemäßen Spülmedium gemäß Beispiel 3, dem relevanten Beispielprodukt gemäß Vergleichsbeispiel VB1 sowie der Zusammensetzung gemäß Vergleichsbeispiel VB2 durchgeführt, und die erhaltenen Ergebnisse verglichen.

Die in der sechsten Versuchsreihe erhaltenen Ergebnisse sind aus Tabelle 7 zu entnehmen. Die Glocke des Hochrotationszerstäubers sollte nach der Durchführung von Versuch 6 möglichst sauber und trocken sein:

**Tabelle 7: Ergebnisse für Versuch 6, zur Erläuterung vgl. obige Beschreibung**

| Spülmedium gemäß Beispiel | **B3** | VB1 | VB2 |
|---|---|---|---|
| Standard-Basecoat, rot | sauber, nahezu trocken | sauber, trocken | sauber, feucht glänzend |
| Standard-Basecoat, blau | sauber, nahezu trocken | sauber, trocken | sauber, feucht glänzend |

Im Ergebnis belegt Versuch 1 die Praxistauglichkeit und Verträglichkeit des erfindungsgemäßen Spülmediums. Versuch 2 zeigt eindrucksvoll, dass ein Spülmedium mit erfindungsgemäßer Zusammensetzung trotz VOC-Reduzierung die Reinigungsgüte und -spontanität eines bisher bekannten Standardprodukts, bei gleichzeitig reduziertem Rohstoffeinsatz, erreicht. Versuch 3 zeigt deutlich, dass ein Spülmedium mit erfindungsgemäßer Zusammensetzung die Reinigungsgüte und -spontanität eines bisher bekannten Standardprodukts erreicht. Versuch 4 belegt, dass ein Spülmedium mit erfindungsgemäßer Zusammensetzung, unter äußerst praxisnahen Bedingungen, mindestens vergleichbare Spülergebnisse liefert wie das Vergleichsbeispiel des relevanten Standardprodukts.

Versuch 5 belegt für kurze Kontaktzeiten des Spülmediums von 10s mit nicht ausgehärteten Lackanhaftungen in überraschender Weise bessere Ergebnisse des erfindungsgemäßen Spülmediums gegenüber dem Standardprodukt für kurze Kontaktzeiten, sowie erheblich bessere Ergebnisse gegenüber einem Produkt mit hohem DBE-Gehalt, welches nicht für kurze Kontaktzeiten ausgelegt ist.

Versuch 6 belegt für sehr kurze Kontaktzeiten des Spülmediums von 1,5s mit ggf. sogar bereits geringfügig angetrockneten Lackanhaftungen einerseits eine sehr gute, mit dem Standardprodukt vergleichbare Reinigungswirkung, belegt aber andererseits gegenüber dem Produkt mit hohem DBE-Gehalt auch überraschend kurze Trocknungszeiten.

Alle durchgeführten Versuche sind praxisgerecht und praxisrelevant. Das erfindungsgemäße Spülmedium erweist sich dabei als praxistauglich und als insgesamt vorteilhafte Alternative gegenüber dem Standardprodukt mit hohem VOC-Gehalt, insbesondere auch bei kurzen Kontakt- und/oder Trocknungszeiten.

Abschließend sei betont, dass die vorstehend erläuterten Beispiele die erfindungsgemäße Lehre erörtern, diese jedoch nicht auf die Beispiele einschränken.

## Patentansprüche

1. Stoffzusammensetzung, nämlich flüssige Spül- oder Reinigungszusammensetzung auf Basis organischer Lösungsmittel, insbesondere zur Entfernung von nicht ausgehärteten Lackanhaftungen,
**dadurch gekennzeichnet, dass** die Zusammensetzung die folgenden Komponenten aufweist:
(1) mindestens ein organisches Lösungsmittel mit VOC-Eigenschaften, nämlich mit einem Dampfdruck von 0,1 mbar oder mehr bei 293,15 Kelvin, wobei Komponente (1) ausgewählt ist aus der Gruppe
Butylacetat,
Xylol,
1-Methoxy-2-propanol,
n-Butanol,
eine Mischung aus mindestens zwei hiervon,
und wobei der Anteil der Komponente (1) an der gesamten Zusammensetzung 30 - 85 Massen-% (Ma.-%) beträgt,
(2) mindestens ein dibasischer Ester,
wobei der Anteil der Komponente (2) an der gesamten Zusammensetzung 15 - 40 Massen-% beträgt.

2. Stoffzusammensetzung nach Anspruch 1, **dadurch gekennzeichnet, dass** der Anteil der Komponente (2) an der gesamten Zusammensetzung 20 - 30 Massen-% (Ma.-%) beträgt.

3. Stoffzusammensetzung nach Anspruch 1 oder 2, **dadurch gekennzeichnet, dass** Komponente (2) ausgewählt ist aus der Gruppe
Dimethylsuccinat,
Dimethylglutarat,
Dimethyladipat,
eine Mischung aus mindestens zwei hiervon.

4. Stoffzusammensetzung nach Anspruch 3, **dadurch gekennzeichnet, dass** Komponente (2) für sich gesehen besteht aus:
Dimethylsuccinat 10 - 25 Ma.-%,
Dimethylglutarat 50 - 67 Ma.-%,
Dimethyladipat 10 - 35 Ma.-%
wobei die Massenanteile sich auf die Gesamtmasse von Komponente (2) beziehen und die Summation der Massenanteile 100,0 Ma.-% beträgt.

5. Stoffzusammensetzung nach einem der Ansprüche 1 bis 4, **dadurch gekennzeichnet, dass** die Zusammensetzung 1 - 40 Ma.% einer zusätzlichen VOC-freien Komponente
(3) mindestens ein Glycolether mit 8-10 C-Atomen
aufweist.

6. Stoffzusammensetzung nach Anspruch 5, **dadurch gekennzeichnet, dass** Komponente (3) Butyldiglycol ist.

7. Stoffzusammensetzung nach Anspruch 5 oder 6, **dadurch gekennzeichnet, dass** der Anteil der Komponente (3) an der gesamten Zusammensetzung 1 - 15 Massen-% (Ma.-%) beträgt.

8. Verwendung einer Stoffzusammensetzung nach einem der Ansprüche 1 bis 7 bei einem Verfahren zur Spülung und Reinigung mit kurzen Kontaktzeiten der Stoffzusammensetzung mit zu reinigenden Teilen, wobei die Kontaktzeit 0,5 - 20 Sekunden (s) beträgt.

9. Verwendung nach Anspruch 8, **dadurch gekennzeichnet, dass** die Kontaktzeit 1 - 10s, insbesondere 1 - 5s, insbesondere 1 - 4s, und insbesondere 1,5 - 4s beträgt.

10. Verwendung einer Stoffzusammensetzung nach einem der Ansprüche 1 bis 7 bei einem Verfahren zur periodischen Spülung und Reinigung von zu reinigenden Teilen.

11. Verwendung nach Anspruch 10, **dadurch gekennzeichnet, dass** die Dauer einer Spülperiode 0,5 - 2s, und insbesondere 1s, beträgt.

12. Verwendung nach Anspruch 10 oder 11, **dadurch gekennzeichnet, dass** 4 - 5 Spülperioden, ggf. jeweils unterbrochen von einer Periode der Beaufschlagung mit Pulsluft, erfolgen.

13. Verwendung einer Stoffzusammensetzung nach einem der Ansprüche 1 bis 7 zur periodischen Spülung und Reinigung von lackführenden Teilen von:
- Anlagen für einen kontinuierlichen Spritzlackierprozess, und/oder
- Lackierstrecken, und/oder
- Lackierstraßen, insbesondere Karosserielackierstraßen, und/oder
- Anlagen für elektrostatische Spritzverfahren.

14. Verwendung nach Anspruch 13, **dadurch gekennzeichnet, dass** die Stoffzusammensetzung zur Spülung und Reinigung von:
- lackführenden Versorgungs- oder Ringleitleitungen von Anlagen für einen kontinuierlichen Spritzlackierprozess, und/oder
- Lack-Hochrotationszerstäubern (Glocken), und/oder
- Lack-Spritzzerstäubern, und/oder
- Lackier-Handpistolen
verwendet wird.

## Claims

1. A composition of matter, namely a liquid rinsing or cleaning composition based on organic solvents, in particular for removing uncured paint adhesions, **characterized in that** the composition comprises the following components:
(1) at least one organic solvent having VOC properties, namely having a vapour pressure of 0.1 mbar or more at 293.15 Kelvin, wherein component (1) is selected from the group consisting of
butyl acetate,
xylene,
1-methoxy-2-propanol,
n-butanol,
a mixture of at least two of these,
and wherein the fraction of component (1) in the total composition is 30 - 85% by mass (ma.-%),
(2) at least one dibasic ester,
the fraction of component (2) in the total composition being 15-40% by mass.

2. The composition of matter according to claim 1, **characterized in that** the fraction of component (2) in the total composition is 20-30% by mass (ma.-%).

3. The composition of matter according to claim 1 or 2, **characterized in that** component (2) is selected from the group consisting of
dimethyl succinate,
dimethyl glutarate,
dimethyl adipate,
a mixture of at least two of these.

4. The composition of matter according to claim 3, **characterized in that** component (2), taken separately, consists of:
dimethyl succinate 10 - 25 ma.-%,
dimethyl glutarate 50 - 67 Ma.-%,
dimethyl adipate 10 - 35 Ma.-%
wherein the mass fractions refer to the total mass of component (2) and the summation of the mass fractions is 100.0% by mass.

5. The composition of matter according to any one of claims 1 to 4, **characterized in that** the composition comprises 1 - 40 wt.% of an additional VOC-free component: (3) at least one glycol ether with 8-10 C atoms.

6. The composition of matter according to claim 5, **characterized in that** component (3) is butyl diglycol.

7. The composition of matter according to claim 5 or 6, **characterized in that** the fraction of component (3) in the total composition is 1 - 15 mass % (ma.-%).

8. Use of a composition of matter according to any one of claims 1 to 7 in a process for rinsing and cleaning with short contact times of the composition of matter with parts to be cleaned, wherein the contact time is 0.5 - 20 seconds (s).

9. Use according to claim 8, **characterized in that** the contact time is 1 - 10s, in particular 1 - 5s, in particular 1 - 4s, and in particular 1.5 - 4s.

10. Use of a composition of matter according to any one of claims 1 to 7 in a method for periodically rinsing and cleaning of parts to be cleaned.

11. Use according to claim 10, **characterized in that** the duration of a rinsing period is 0.5 - 2s, and in particular 1s.

12. Use according to claim 10 or 11, **characterized in that** 4 - 5 rinsing periods are carried out, in particular interrupted in each case by a period of exposure to pulsed air.

13. Use of a composition of matter according to any one of claims 1 to 7 for periodically rinsing and cleaning paint-carrying parts of:
- facilities for a continuous spray-painting process, and/or
- painting sections, and/or
- painting lines, in particular car body painting lines, and/or
- facilities for electrostatic spraying.

14. Use according to claim 13, **characterized in that** the composition of matter is used for rinsing and cleaning of:
- paint-conducting supply- or ring lines of facilities for a continuous spray-painting process, and/or
- high-rotation paint atomizers (bell-shaped atomizers), and/or
- paint spray atomizers, and/or
- handheld spray guns.

## Revendications

1. Une composition de matière, à savoir une composition liquide de rinçage ou de nettoyage à base de solvants organiques, notamment pour l'élimination d'adhérences de peinture non durcies,
**caractérisée en ce que** la composition comprend les composants suivants:
(1) au moins un solvant organique ayant des propriétés de COV, à savoir ayant une pression de vapeur de 0,1 mbar ou plus à 293,15 kelvins, dans lequel le composant (1) est choisi dans le groupe
acétate de butyle,
le xylène,
1-méthoxy-2-propanol,
n-butanol,
un mélange d'au moins deux d'entre eux,
et dans laquelle la proportion du composant (1) par rapport à la composition totale est de 30 à 85% en masse (ma.%),
(2) au moins un ester dibasique,
la proportion du composant (2) par rapport à la composition totale étant de 15 à 40% en masse.

2. La composition de matière selon la revendication 1, **caractérisée en ce que** la proportion du composant (2) par rapport à la composition totale est de 20 à 30% en masse (ma.-%).

3. La composition de matière selon la revendication 1 ou 2, **caractérisée en ce que** le composant (2) est choisi parmi le groupe
succinate de diméthyle,
glutarate de diméthyle,
adipate de diméthyle,
un mélange d'au moins deux d'entre eux.

4. La composition de matière selon la revendication 3, **caractérisée en ce que** le composant (2), considéré isolément, consiste en:
succinate de diméthyle 10 - 25 ma.%,
diméthylglutarate 50 - 67 ma.-%,
adipate de diméthyle 10 - 35 ma.-%,
les proportions en masse se rapportant à la masse totale du composant (2), et la somme des proportions en masse étant de 100,0 ma.-%.

5. La composition de matière selon l'une quelconque des revendications 1 à 4, **caractérisée en ce que** la composition contient 1 à 40 ma.-% d'un composant supplémentaire exempt de COV : (3) au moins un éther de glycol ayant de 8 à 10 atomes de carbone.

6. La composition de matière selon la revendication 5, **caractérisée en ce que** le composant (3) est le butyldiglycol.

7. La composition de matière selon la revendication 5 ou 6, **caractérisée en ce que** la proportion du composant (3) par rapport à la composition totale est de 1 à 15% en masse (ma.-%).

8. Une utilisation d'une composition de matière selon l'une quelconque des revendications 1 à 7 dans un procédé de rinçage et de nettoyage avec des temps de contact courts de la composition de matière avec les pièces à nettoyer, le temps de contact étant de 0,5 à 20 secondes (s).

9. L'utilisation selon la revendication 8, **caractérisée en ce que** le temps de contact est de 1 à 10s, en particulier de 1 à 5s, en particulier de 1 à 4s, et en particulier de 1,5 à 4s.

10. Une utilisation d'une composition de matière selon l'une quelconque des revendications 1 à 7 dans un procédé de rinçage et de nettoyage périodiques de pièces à nettoyer.

11. L'utilisation selon la revendication 10, **caractérisée en ce que** la durée d'une période de rinçage est de 0,5 à 2s, et en particulier de 1s.

12. L'utilisation selon la revendication 10 ou 11, **caractérisée en ce que** 4 à 5 périodes de rinçage sont effectuées, le cas échéant chaque fois interrompues par une période d'exposition à l'air pulsé.

13. Une utilisation d'une composition de matière selon l'une des revendications 1 à 7 pour le rinçage et le nettoyage périodiques de parties conduisant la peinture des:
- installations pour un processus continu de peinture par pulvérisation, et/ou
- lignes de peinture, et/ou
- chaînes de peinture, en particulier des chaînes de peinture de carrosserie, et/ou
- installations pour la pulvérisation électrostatique.

14. L'utilisation selon la revendication 13, **caractérisée en ce que** la composition de substances est utilisée pour le rinçage et le nettoyage des:
- lignes d'alimentation ou des conduites circulaires transportant de la peinture d'installations destinées à un processus continu de peinture par pulvérisation, et/ou
- pulvérisateurs de vernis à rotation élevée (cloches), et/ou
- pulvérisateurs de peinture, et/ou
- pistolets à peinture.
